# FASCICULE DE BREVET EUROPEEN

(11) **EP 0 817 935 B1**
(45) Date de publication et mention de la délivrance du brevet: **20.01.1999**
(21) Numéro de dépôt: 96907536.5
(22) Date de dépôt: 15.03.1996
(51) Int. Cl.: F16L 11/08, F16L 11/12, F16L 11/16

(54) **CONDUITE TUBULAIRE FLEXIBLE A GAINE D'ETANCHEITE INTERNE POLYMERIQUE**
SCHLAUCH MIT EINER DICHTUNGSINNENSCHICHT AUS POLYMER
FLEXIBLE TUBULAR PIPE WITH AN INTERNAL IMPERVIOUS POLYMERIC SHEATH

(30) Priorité: 29.03.1995 FR 9503663
(43) Date de publication de la demande: 14.01.1998
(73) Titulaire: COFLEXIP, 75116 Paris (FR)
(72) Inventeur: HARDY, Jean, 76360 Barentin (FR)
(74) Mandataire: Levy, David
(86) Numéro de dépôt international: FR9600397
(87) Numéro de publication internationale: WO9630687

(56) Documents cités:
- EP-A- 0 446 725
- WO-A-92/00481
- WO-A-95/24579
- US-A- 3 687 169

## Description

La présente invention concerne des conduites tubulaires flexibles qui comprennent généralement de l'intérieur vers l'extérieur :
- un tube métallique flexible interne non étanche, appelé carcasse interne, constitué par un profilé enroulé en spires agrafées les unes sur les autres, comme par exemple un feuillard agrafé ou un fil de forme agrafé tel qu'un fil en T ou en U ;
- une gaine d'étanchéité interne ;
- un ensemble d'armures comprenant une couche d'armures constituant une voûte de pression réalisée au moyen d'un fil de forme agrafé spiralé à faible pas, en forme de T, Z ou U, et des nappes d'armures dites de traction, chacune de ces dernières nappes de traction étant réalisées par un enroulement de fils spiralés avec un angle d'armage inférieur à 55°. Dans une autre variante, l'ensemble d'armures est constitué par des nappes dont les angles d'armage sont à 55° ou dont les angles d'armage sont complémentaires d'une nappe à l'autre, par exemple une nappe à 50° associée à une nappe 60° ; l'ensemble d'armures résiste en particulier à l'effet circonférentiel ("hoop stress" en anglais) et à la composante axiale (effet de fond) de la pression interne, ainsi qu'à la charge axiale due au poids de la conduite suspendue et aux effets extérieurs ;
- une gaine polymérique de protection externe.

La conduite peut comprendre en outre une ou plusieurs gaines polymériques intermédiaires et/ou des nappes d'enroulement plastiques.

Une telle conduite tubulaire flexible est représentée sur la figure 1 et elle décrite notamment dans les brevets FR-A-2 619 193 "Flexible Stable 4 Nappes", FR-A-2 654 795 "Onde interne", et dans "Recommanded Practice for Flexible Pipe-API Recommanded Practice 17B (RP17B) First Edition June 1, 1988".

Du fait de la structure du tube métallique flexible interne, des interstices sont présents entre les spires d'enroulement qui permettent la flexion dudit tube métallique interne.

De nombreuses solutions ont été proposées pour réaliser de façon industrielle la gaine d'étanchéité interne. De plus en plus. on s'est orienté vers l'utilisation d'un matériau polymérique qui soit faiblement perméable aux liquides et aux gaz, qui résiste aux températures élevées du fluide transporté et qui soit facilement mise en oeuvre industriellement, en particulier par extrusion.

Les matériaux polymériques qui présentent ces propriétés se sont avérés être certains polymères semi-cristallins. Parmi ces derniers, on a ensuite sélectionné ceux qui devaient résister au pétrole brut de gisement contenant du gaz ("live crude" en anglais) sans effet de cloquage ("Blistering") et gonflement.

On utilise ainsi couramment certains grades de Polyamide 11 mais ce matériau, qui donne d'excellents résultats dans de très nombreux cas n'est pas utilisable dans les applications les plus sévères, en raison de sa résistance limitée aux températures élevées et de sa sensibilité à la présence d'eau. Pour les applications les plus exigeantes, on utilise certains grades Polyfluorure de vinylidène (PVDF). Toutefois, et contrairement à ce qu'on pensait, on a découvert que le PVDF ne résistait pas au cloquage au-delà d'une température de l'ordre de 130° à 150°. En outre, de la même façon que d'autres polymères semi-cristallins présentant une contraction volumique relativement importante lors du passage à l'état solide. Le PVDF peut présenter des risques d'amorces de rupture dans la zone de l'interstice entre deux spires consécutives du tube métallique interne.

Il est maintenant envisagé, pour les installations de production pétrolière sous-marine d'utiliser les conduites tubulaires flexibles dans des conditions encore plus sévères, avec, en particulier, des températures supérieures à 130°C, pouvant dépasser 150°C et même atteindre au moins 180°C. Aucune solution n'est connue aujourd'hui comme satisfaisante dans de telles conditions.

Dans US-A-4 402 346, il est proposé de réaliser la gaine d'étanchéité interne avec les fluoroplastiques incluant le TEFZEL, le TEFLON FEP et le TEFLON PFA. Il a été trouvé que certains grades d'ETFE et de FEP sont utilisables pour les gaines d'étanchéité des conduites tubulaires flexibles, du fait, en particulier, de leur bonne extrudabilité et de leur résistance à température élevée. Mais il est apparu que leur résistance au blistering devient insuffisante aux températures très élevées qui sont visées par l'invention. Par ailleurs, sur la base des propriétés du PFA telles qu'elles étaient alors connues, il était logique d'envisager son utilisation en présence de pétrole à température élevée. Toutefois, il n'est pas indiqué dans ce document quel est le comportement du PFA vis-à-vis du fluide de gisement ("live crude") à haute température, notamment à une température supérieure à 100°C et pouvant atteindre 150°C à 180°C, ni à l'égard du cloquage ("Blistering"). En particulier, les effets de cloquage qui affectent, à des degrés très variés, les divers polymères utilisables ont fait l'objet, postérieurement à la date de ce brevet, d'importants travaux du déposant, travaux qui ont montré que les phénomènes en cause sont très complexes, et que, pour un polymère donné, il est impossible dans de très larges proportions, de prévoir l'ordre de grandeur de la température à partir de laquelle il sera sujet aux effets de cloquage en présence de pétrole brut de gisement, le seul moyen possible pour une telle évaluation étant de réaliser des essais très poussés. Pour remédier à la pénétration par fluage dans les interstices de la carcasse interne et afin d'éviter que la flexibilité de la conduite ne soit diminuée, il est préconisé d'intercaler un bandage réalisé par enroulement d'un ruban tissé en fibres de verre entre la carcasse interne et la gaine en PFA afin de constituer un appui pour ledit PFA. Néanmoins, il s'est avéré que ces solutions n'étaient pas satisfaisantes, en particulier, qu'il est impossible dans la pratique de fabrication industrielle, de réaliser l'enroulement d'un ruban sans risquer l'apparition ou bien d'un recouvrement partiel ou bien d'un jeu entre spires consécutives, ce qui conduit à un marquage du PFA et à une amorce de rupture lors d'une flexion, et ceci qu'il s'agisse d'un ruban tissé en fibres de verre tel que décrit dans US-A-4 402 346 ou d'un ruban tissé en toutes autres fibres, ou encore, comme proposé EP-0-166 385 pour le cas d'une gaine en PVDF, d'un ruban en polyester ou autre matière plastique.

En outre, il a été trouvé que, si on ne dispose pas un tel bandage autour de la carcasse interne une gaine d'étanchéité externe qui s'appuie ainsi directement sur la carcasse interne présente des risques de fissuration inacceptables dans la zone au voisinage des interstices de la carcasse interne, si elle est simplement réalisée par extrusion d'une couche de PFA telle que décrite dans US-A-4 402 346.

On connaît également des thermoplastiques tels que le PEI qui conservent leurs propriétés à haute température et dont il semble par conséquent intéressant d'étudier l'application aux gaines d'étanchéité des conduites tubulaires flexibles et en particulier, la résistance au cloquage. Mais leur rigidité est tellement élevée qu'on ne voit aucune solution possible pour réaliser la gaine d'étanchéité à partir d'un tel matériau tout en conservant les autres qualités requises, que ce soit par modification du matériau, adjonction d'agents d'assouplissement ou tout autre moyen.

La présente invention a pour but de remédier aux inconvénients précités et de proposer pour une conduite tubulaire flexible une gaine d'étanchéité interne résistante à une haute température et à l'effet de cloquage.

La présente invention a pour objet une conduite tubulaire flexible du type comprenant au moins, de l'intérieur vers l'extérieur, une carcasse métallique non étanche interne, une gaine polymérique d'étanchéité interne, un ensemble de nappes de fils d'armure, et une gaine de protection externe, la carcasse interne étant constituée par au moins un profilé enroulé hélicoïdalement en spires agrafées de sorte qu'au moins la surface extérieure de ladite carcasse interne présente des interstices entre des spires consécutives caractérisée en ce que ladite gaine polymérique d'étanchéité interne comprend principalement une partie en un polymère thermoplastique associant au moins deux monomères fluorés, l'un au moins desdits monomères fluorés portant au moins une fonction alkoxy et ladite partie en polymère thermoplastique se présentant sous la forme d'une couche tubulaire continue et dépourvue d'amorces de rupture dans la zone desdits interstices.

Le fait d'utiliser un copolymère ou terpolymère thermoplastique fluoré conforme à l'invention pour réaliser une structure tubulaire continue constituant la gaine d'étanchéité interne ou une partie principale de cette gaine permet une meilleure aptitude à résister aux hautes températures des fluides de gisement circulant dans la conduite tubulaire flexible et sans risque de formation d'amorces de rupture dans les interstices des spires. Il a été trouvé, en particulier, qu'un tel polymère fluoré présente une aptitude exceptionnelle à rester exempt d'effets de cloquage sous l'action des fluides de gisement à très haute température, la température pouvant dépasser 130°C et atteindre 150°C à 180°C et même plus de 180°C éventuellement.

Dans un premier mode de réalisation, la structure tubulaire continue réalisée par extrusion d'un copolymère ou d'un terpolymère fluoré conforme à l'invention, repose directement sur la carcasse interne.

Dans un deuxième mode de réalisation, en plus d'une partie principale constituée par une couche tubulaire continue réalisée en un copolymère ou terpolymère thermoplastique fluoré conforme à l'invention, la gaine d'étanchéité interne comprend une partie interne, reposant sur la carcasse interne à l'intérieur de ladite couche tubulaire continue, réalisée en un polymère de préférence amorphe et apte à résister à des températures élevées.

Dans une première variante, la partie interne constitue une couche tubulaire, de préférence continue et mise en place par extrusion et d'épaisseur de préférence faible, de l'ordre de 0,5 mm à 3 mm. Le polymère utilisé est un polymère thermoplastique fluoré amorphe présentant une résistance au fluage pour des températures élevées supérieures à celles du polymère conforme à l'invention utilisée pour réaliser la couche tubulaire constituant la partie principale de la gaine d'étanchéité interne. On peut, en particulier, utiliser un copolymère ou un terpolymère associant le TFE et un autre monomère fluoré, en particulier un éther cyclique fluoré ou un aldéhyde fluoré.

Dans une deuxième variante, la partie interne est réalisée en un élastomère, thermoplastique ou non, présentant un module de préférence sensiblement inférieur à celui du polymère thermoplastique constituant la partie principale de la gaine polymérique d'étanchéité interne. Cette partie interne élastomérique peut constituer une enveloppe continue autour de la carcasse interne, sa surface interne pouvant présenter une partie en relief pénétrant partiellement dans l'interstice séparant deux spires consécutives de la carcasse interne. De préférence, la partie interne élastomérique présente la forme, non pas d'une couche tubulaire continue, mais d'une bande dont la section occupe approximativement la partie extérieure de l'interstice entre les spires consécutives de la carcasse interne, cette bande étant enroulée hélicoïdalement en suivant les interstices. La bande peut ainsi pénétrer plus ou moins profondément dans l'interstice ou encore éventuellement occuper tout le volume libre de l'interstice.

D'autres caractéristiques et avantages ressortiront mieux à la lecture de la description de plusieurs modes de réalisation de l'invention ainsi que des dessins annexés sur lesquels :
- la figure 1 est une vue partielle en perspective d'une conduite tubulaire flexible,
- la figure 2 est une vue partielle en perspective d'une conduite selon un autre mode de réalisation selon l'invention,
- les figures 3, 4 et 5 sont des vues en coupe partielles transversales d'autres modes de réalisation selon l'invention.

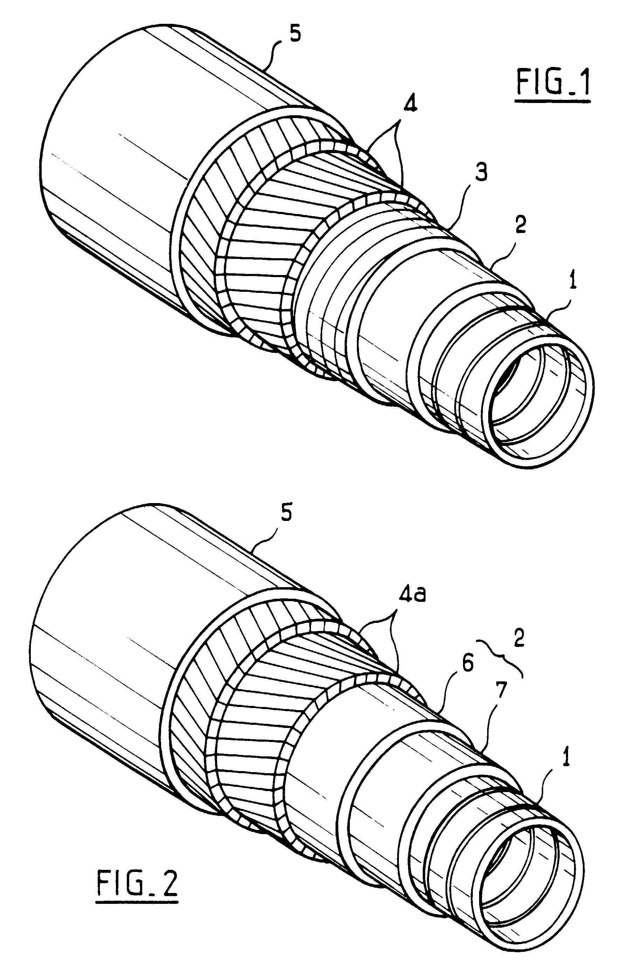

La figure 1 représente une conduite tubulaire flexible comprenant de l'intérieur vers l'extérieur :
- un tube métallique flexible 1, non étanche, appelé carcasse interne, constitué par un profilé enroulé de façon à former des spires agrafées les unes sur les autres, comme par exemple un feuillard agrafé ou un fil de forme agrafé tel qu'un fil en T ou en U ;
- une gaine d'étanchéité interne 2 dont les composants et la structure seront donnés ultérieurement et qui fait l'objet de la présente invention;
- un ensemble d'armures 3, 4 comprenant une voûte de pression 3 et une couche d'armures 4.

La voûte de pression 3 est réalisée par exemple au moyen d'un fil de forme agrafé spiralé à faible pas, en forme de T, Z ou U. La couche d'armures 4, dite de traction, comporte deux nappes superposées réalisées chacune par enroulement en sens opposés de fils spiralés avec un angle d'armage inférieur à 55°. Dans une autre variante, l'ensemble d'armures est constitué par deux nappes dont les angles d'armage sont à 55° ou dont les angles d'armage sont complémentaires d'une nappe à l'autre, par exemple une nappe à 55° associée à une nappe à 60°. Dans tous les cas, l'ensemble d'armures résiste en particulier à l'effet circonférentiel ("hoop stress") et à la composante axiale (effet de fond) des efforts créés par la pression interne, à la charge axiale due au poids de la conduite et aux efforts de torsion ;
- une gaine polymérique de protection extérieure 5.

En variante (non illustrée) la conduite tubulaire flexible peut comprendre une ou plusieurs gaines polymériques intermédiaires et/ou des nappes d'enroulement plastiques.

Selon un premier mode de réalisation de la présente invention, la gaine polymérique interne 2 est constituée par une couche tubulaire continue, réalisée par extrusion d'un copolymère ou d'un terpolymère thermoplastique associant au moins un monomère fluoré comportant au moins une fonction alkoxy avec au moins un autre monomère fluoré.

Dans un premier exemple, la gaine 2 est réalisée en un copolymère obtenu par polymérisation d'au moins 50 % et avantageusement au moins 70 % de tétrafluoroéthylène (TFE) et d'un perfluoroalkylvinyléther qui est de préférence du perfluoropropylvinyléther ou encore du perfluoroéthylvinyléther. Alternativement, on peut utiliser un copolymère dans lequel l'autre monomère associé au perfluoroalkylvinyléther est, dans un autre exemple, un monomère cyclique fluoré, ou dans un autre exemple encore, un monomère du type anhydride fluoré.

La gaine polymérique d'étanchéité interne 2 peut, en particulier, être réalisée par extrusion d'un matériau du type des produits disponibles dans le commerce sous le nom PFA.

Le choix de la proportion entre le monomère fluoré portant au moins une fonction alkoxy et l'autre monomère fluoré, en particulier, le TFE, est optimisé en fonction des propriétés mécaniques recherchées. En particulier, il est ainsi possible d'obtenir un module de flexion supérieur ou égal à 50 MPa, et de préférence supérieur ou égal à 100 MPa pour la température maximale d'utilisation prévue, cette température pouvant atteindre au moins 130°C et de préférence au moins 150°C, le module de flexion étant inférieur ou égal à 2500 MPa pour la température d'environnement la plus basse envisagée, cette température pouvant être égale ou inférieure à -20°C et de préférence à -40°C. On peut de même obtenir une résistance au fluage suffisante lorsque le matériau est soumis aux températures et aux pressions imposées par le fluide transporté.

Dans un autre exemple, le polymère fluoré constituant la gaine est un terpolymère associant, outre un monomère fluoré portant au moins une fonction alkoxy et au moins 50 % d'un autre monomère fluoré. un troisième monomère, de préférence fluoré, et de préférence en faible partie, avantageusement inférieur à 10 %. De préférence, le troisième monomère est du fluorure de vinylidène (VF2) ou dans un autre exemple le chlorotrifluoroéthylène (CTFE).

Dans une autre variante, le polymère constituant la gaine 2 est un terpolymère associant le TFE et deux monomères fluorés portant chacun au moins une fonction alkoxy.

Dans les cas décrits ci-dessus d'utilisation d'un terpolymère, la présence d'un troisième monomère, bien que mineure, peut donner plus de facilité pour optimiser les propriétés du matériau dans les conditions d'utilisation, en particulier ses propriétés mécaniques.

Dans une autre variante, le polymère constituant la gaine d'étanchéité 2 est un copolymère ou un terpolymère comportant au moins un éther cyclique.

Le copolymère ou terpolymère constituant la gaine 2 est du type semi-cristallin, la phase amorphe pouvant être relativement faible ou relativement importante. Alternativement, le polymère peut être pratiquement amorphe.

Dans une forme de réalisation de l'invention, le copolymère ou le terpolymère fluoré est réticulé et présente un taux de cristallinité voisin du taux de cristallinité de l'état non réticulé, la réticulation s'opérant dans la phase amorphe. Alternativement. le polymère étant réticulé, il présente un taux de cristallinité réduit par rapport au taux de l'état non réticulé.

Dans un autre mode de réalisation illustré sur la figure 2, la gaine polymérique d'étanchéité interne 2 comprend deux parties, une partie principale 6 à l'extérieur, réalisée en un copolymère ou terpolymère conforme à l'invention et formant une couche tubulaire continue d'épaisseur sensiblement constante et une partie interne 7 constituant également une couche tubulaire de préférence continue enveloppant la carcasse interne sur laquelle elle est en appui. De préférence, l'épaisseur de cette couche tubulaire interne 7 est relativement faible, inférieure à l'épaisseur de la couche extérieure 6 constituant la partie principale de la gaine 2, et elle est comprise entre 0,5 et 3 mm. Avantageusement, le matériau constituant la couche tubulaire interne 7 est un polymère thermoplastique amorphe, de préférence, un polymère amorphe fluoré présentant une résistance élevée au fluage, en particulier un copolymère ou un terpolymère thermoplastique associant au moins le TFE à au moins un autre monomère fluoré, en particulier un éther cyclique fluoré ou un aldéhyde fluoré. La surface interne de la couche interne 7 peut éventuellement présentée un renflement pénétrant de préférence faiblement dans les interstices de la carcasse interne.

Alternativement, le matériau constituant la couche tubulaire interne 7 est un élastomère thermoplastique ou non, présentant un module relativement faible, inférieur au module du polymère constituant la couche tubulaire 6. Dans ce cas, la surface interne de la couche 7 présente des parties en relief vers l'intérieur de la conduite, ces parties en relief suivant la configuration hélicoïdale des interstices que présente la carcasse interne et pénétrant plus ou moins profondément dans ces interstices.

La conduite tubulaire flexible de la figure 2 ne possède pas de nappe d'armures du type voûte de pression telle que la nappe 3 de la figure 1. L'ensemble d'armures est constitué par deux nappes d'armures 4a, les fils des deux nappes étant enroulés en sens opposés avec des angles tels que la structure soit équilibrée, par exemple, posés à 55°.

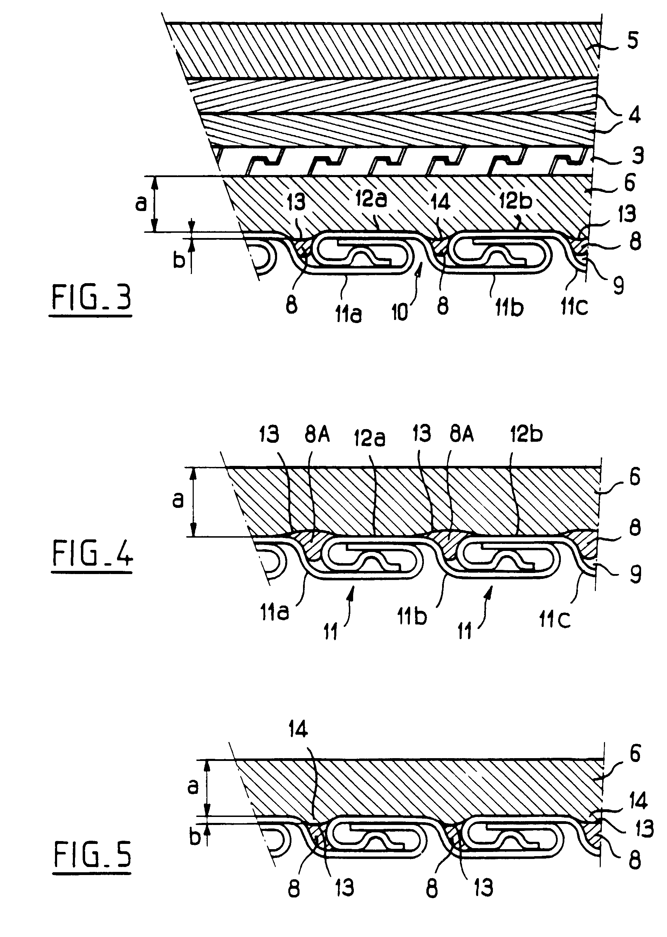

Dans un autre mode de réalisation correspondant aux exemples illustrés sur les figures 3, 4 et 5, la gaine polymérique d'étanchéité interne 2 comprend également deux parties :
- une partie principale constituant une couche tubulaire continue 6 comme sur la figure 2, réalisée également en un polymère suivant l'invention ; et
- une partie interne constituée par une bande 8 enroulée hélicoïdalement le long des interstices 9 de la carcasse interne 1 et pénétrant plus ou moins profondément dans les interstices. éventuellement totalement.

En effet, la carcasse interne 1 comprend des spires qui délimitent des espaces interstitiels 9 ouverts vers l'extérieur, de configuration générale hélicoïdale, ainsi que des interstices internes ouverts vers l'intérieur 10. Dans ces conditions et comme cela est représenté sur les figures 3 à 5 qui illustrent en coupe longitudinale partielle et agrandie une conduite flexible selon cet autre mode de réalisation de l'invention, on dispose autour de la carcasse interne 1 une couche intermédiaire élastomère constituée par une bande d'élastomère 8 disposée en partie dans l'espace interstitiel 9 entre les spires 11 de la carcasse interne 1. La succession alternée des parties cylindriques extérieures 12a, 12b de la carcasse interne et des surfaces extérieures 13 de la bande élastomère 8 constituent une surface de forme approximativement cylindrique sur laquelle la gaine d' étanchéité polymérique 2 prend appui de façon continue. De cette manière, on évite d'avantage de possibles amorces de rupture de la gaine polymérique 2 dans la zone et/ou autour des interstices 9 entre les spires 11 de la carcasse interne.

Dans la variante illustrée sur la figure 3, la bande d'élastomère pénètre partiellement dans l'interstice 9 entre deux spires contiguës telles que 11a et 11b ou 11b et 11c, et, par rapport à la configuration idéale qui serait une surface parfaitement géométrique dans le prolongement des parties cylindriques extérieures 12a, 12b de la carcasse interne 1, la surface extérieure 13 de la bande élastomère 8 présente une légère irrégularité qui, dans le cas de la figure 3 est en forme de cuvette de convexité tournée vers l'intérieure de la conduite. Dans ce cas, vu de l'intérieur, la couche tubulaire thermoplastique 6 présente un léger renflement 14 dont l'épaisseur b est de préférence inférieure ou égale à 0,3 a, a étant l'épaisseur de la couche tubulaire 6 dans sa partie cylindrique autour des surfaces 12a, 12b.

Dans la variante de la figure 4, la bande d'élastomère 8 pénètre également de façon partielle dans les interstices 9 mais sa surface extérieure 13 est de forme légèrement bombée et se raccordant progressivement avec les surfaces cylindriques 12a, 12b en présentant une faible courbure.

Dans la variante de la figure 5, la bande d'élastomère 8 pénètre totalement dans les interstices 9, sa surface extérieure 13 étant en forme de cuvette présentant une faible courbure de la même façon que la variante de la figure 3.

D'une façon générale, dans le cas des diverses variantes illustrées par les figures 2, 3, 4 et 5 la surface intérieure de la couche tubulaire 6 peut présenter une légère ondulation à l'endroit des interstices 9, mais sa courbure doit varier très progressivement dans la longueur de la conduite tubulaire et rester à des valeurs relativement faibles.

Une description détaillée des caractéristiques géométriques possibles des variantes illustrées sur les figures 2 à 5 est donnée dans la demande FR-A-94 02 765 dont la description relative à la configuration de la couche tubulaire 6, de la couche interne 7 et de la bande en élastomère 8 et à la mise en place de la couche interne 8 est incluse dans la présente demande.

Pour réaliser la couche interne 7 illustrée sur la figure 2 où la bande 8 des figures 3 à 5, on peut utiliser un élastomère proprement dit, (normalement dans l'état vulcanisé ou réticulé) ou un thermoplastique élastomère (TFE). On choisit un élastomère telles que ses propriétés ne soient pas dégradées par la combinaison de l'action des divers composants présents dans le fluide transporté (hydrocarbures divers, eau, etc.) et de la température de ce fluide, au cours du vieillissement du matériau soumis à de telles conditions. Des résultats intéressants sont obtenus avec des élastomères appartenant au groupe des silicones.

Dans le cas où la conduite tubulaire flexible comporte une gaine d'étanchéité interne polymérique réalisée sous la forme d'une couche tubulaire continue 2 en appui direct sur la carcasse 1 (figure 1), la fabrication en grande longueur continue est réalisée de façon classique par extrusion du type extrusion-tubage.

Lorsque la gaine d'étanchéité interne 2 comporte une couche tubulaire 6 en un copolymère ou terpolymère selon l'invention autour d'une couche interne 7 en polymère thermoplastique ou élastomérique ainsi qu'illustré sur la figure 2, il est possible de réaliser la couche interne 7 par extrusion autour de la carcasse 1, en particulier par extrusion-tubage. Dans le cas où le polymère ainsi utilisé pour réaliser la couche 7 est un thermoplastique amorphe, on peut ainsi avantageusement réaliser une couche d'épaisseur à peu près régulière. L'extrusion de la couche tubulaire 6 peut se faire soit par coextrusion des deux couches 6 et 7, soit par extrusion tandem, la couche 6 étant extrudée en ligne à une certaine distance en aval de l'extrudeuse utilisée pour la couche interne 7, soit en une opération distincte et séparée ultérieure.

Dans le cas où la gaine d'étanchéité interne 2 comporte une partie interne constituée par une bande 8 en élastomère disposée dans la partie extérieure des interstices 9, ou éventuellement dans la totalité du volume des interstices, selon l'une ou l'autre des variantes représentées sur les figures 3 à 5, on peut mettre en place la bande 8 soit par extrusion-bourrage, soit en faisant passer la carcasse interne à travers une enceinte remplie d'élastomère à l'état cru, la carcasse ainsi enduite sortant de l'enceinte par un orifice circulaire calibré et obturé par un joint, soit par enduction, ou pulvérisation, ou projection, ou passage dans un bain liquide, ou dans un bain fluidisé, ces divers procédés de revêtements étant bien connus des spécialistes et ne seront donc pas décrits dans le détail.

Lorsque l'élastomère mis en place selon un des procédés décrits ci-dessus est vulcanisable, il peut être déposé à l'état cru, puis vulcanisé, de préférence avant extrusion de la couche tubulaire 6.

Alternativement, la bande 8 peut être mise en place par enroulement en hélice d'un jonc ou d'une bande de grande longueur. cet enroulement étant effectué de manière à suivre la ligne hélicoïdale de l'interstice 9 et à faire pénétrer la bande 8 dans l'interstice à la profondeur voulue. On peut ainsi, en fonction notamment des propriétés mécaniques de l'élastomère, soit utiliser un jonc de forme dont la section correspond à la configuration de l'interstice, soit utiliser un jonc de section simple, par exemple circulaire, en élastomère suffisamment mou pour se déformer en épousant la forme de l'interstice 9.

L'enroulement d'un ruban en élastomère peut également être utilisé pour réaliser une couche interne 7 (figure 2) en enroulant à bords à peu près jointifs un ruban en élastomère suffisamment mou pour qu'il remplisse partiellement les interstices et pour que sa surface externe présente, sous l'effet de l'extrusion de la couche 6, un aspect à peu près continu et lisse.

Dans tous les cas, l'épaisseur de la couche interne 7 est comprise entre 0,5 mm et 5 mm et de préférence 3 mm, alors que la gaine polymérique 2 présente une épaisseur qui est comprise entre 1 et 30 mm et, de préférence 3 et 15 mm, pour un diamètre interne de la carcasse métallique flexible compris entre 20 et 600 mm (de préférence entre 50 et 400 mm) de manière à supporter, d'une part, une pression interne supérieure à 100 bar, normalement de l'ordre de plusieurs centaines de bar et pouvant atteindre 700 à 1000 bar, et d'autre part, résister à des températures élevées dépassant 130°C et atteignant jusqu'à 150°C et davantage.

## Revendications

1. Conduite tubulaire flexible du type comprenant au moins, de l'intérieur vers l'extérieur, une carcasse métallique non étanche interne (1), une gaine polymérique d'étanchéité interne (2), un ensemble de nappes de fils d'armures (3) (4), et une gaine de protection externe (5), la carcasse interne (1) étant constituée par au moins un profilé enroulé hélicoïdalement en spires agrafées de sorte qu'au moins la surface extérieure de ladite carcasse interne présente des interstices (9) entre des spires consécutives, ladite gaine polymérique d'étanchéité interne (2) se présentant sous la forme d'une couche tubulaire continue et comprenant une partie en un polymère thermoplastique associant au moins deux monomères fluorés, caractérisée en ce qu'au moins un desdits monomères fluorés porte au moins une fonction alkoxy, ladite partie en polymère thermoplastique étant résistante à l'effet de cloquage à une température d'au moins 130°C.

2. Conduite selon la revendication 1, caractérisée en ce que le polymère thermoplastique constitue la partie principale de la gaine d'étanchéité interne (1) et comprend au moins un monomère fluoré et moins de 50 % d'un monomère perfluoré portant au moins une fonction alkoxy.

3. Conduite selon les revendications 1 ou 2, caractérisée en ce que le polymère thermoplastique associe un perfluoroalkylvinyléther avec au moins un monomère fluoré.

4. Conduite selon la revendication 3, caractérisée en ce que le perfluoroalkylvinyléther est le perfluoropropylvinyléther.

5. Conduite selon la revendication 3, caractérisée en ce que le perfluoroalkylvinyléther est le perfluoroéthylvinyléther.

6. Conduite selon une des revendications 1 à 5, caractérisée en ce que le polymère thermoplastique associe au moins 50 % de tétrafluoroéthylène (TFE) avec au moins un autre monomère fluoré, au moins l'un desdits autres monomères fluorés portant au moins une fonction alkoxy.

7. Conduite selon une des revendications 1 à 5, caractérisée en ce que le polymère thermoplastique associe un monomère cyclique fluoré avec au moins un autre monomère fluoré, l'un au moins desdits autres monomères fluorés portant au moins une fonction alkoxy.

8. Conduite selon l'une quelconque des revendications 1 à 5, caractérisée en ce que ledit polymère thermoplastique associe un monomère du type anhydride fluoré avec au moins un autre monomère fluoré l'un au moins desdits autres monomères fluorés portant au moins une fonction alkoxy.

9. Conduite selon l'une quelconque des revendications 1 à 8, caractérisée en ce que l'un au moins des monomères fluorés associés pour constituer ledit polymère thermoplastique est un éther cyclique.

10. Conduite selon la revendication 6, caractérisée en ce que ledit polymère thermoplastique associe au moins 70 % de TFE avec au moins un autre monomère fluoré, au moins l'un desdits autres monomères fluorés portant au moins une fonction alkoxy.

11. Conduite selon la revendication 10, caractérisée en ce que le polymère thermoplastique est du type du matériau disponible dans le commerce et connu sous le nom de PFA.

12. Conduite selon l'une des revendications 1 à 10, caractérisée en ce que le polymère thermoplastique est un terpolymère associant deux monomères fluorés dont l'un porte au moins une fonction alkoxy avec une part relativement faible d'un troisième monomère fluoré.

13. Conduite selon la revendication 12, caractérisée en ce que le troisième monomère fluoré est le fluorure vinylidène (VF2).

14. Conduite selon la revendication 12, caractérisée en ce que le troisième monomère fluoré est le chlorotrifluoroéthylène (CTFE).

15. Conduite selon la revendication 12, caractérisée en ce que le terpolymère associe deux monomères fluorés portant chacun au moins une fonction alkoxy avec un autre monomère fluoré.

16. Conduite selon l'une des revendications 1 à 15, caractérisée en ce que le polymère thermoplastique est semi-cristallin.

17. Conduite selon l'une des revendications 1 à 15, caractérisée en ce que le polymère thermoplastique est réticulé et présente un taux de cristallinité voisin du taux correspondant à l'état non réticulé, la réticulation s'opérant dans la phase amorphe.

18. Conduite selon l'une des revendications 1 à 15, caractérisée en ce que le polymère thermoplastique est réticulé et présente un taux de cristallinité réduit par rapport à celui de l'état non réticulé.

19. Conduite selon l'une des revendications 1 à 18, caractérisée en ce que le polymère thermoplastique présente un module de flexion supérieur ou égal à 50 MPa, et de préférence supérieur ou égal à 100 MPa pour la température maximale d'utilisation prévue, cette température pouvant atteindre au moins 130°C et de préférence au moins 150°C, le module de flexion étant par ailleurs inférieur ou égal à 2500 MPa pour la température d'environnement la plus basse envisagée, cette température pouvant être égale ou inférieure à -20°C et de préférence à -40°C.

20. Conduite selon l'une des revendications 1 à 19, caractérisée en ce que la gaine polymérique d'étanchéité interne (1) comprend une partie interne (7) en un polymère de préférence amorphe et reposant sur la carcasse interne (1), à l'intérieur de ladite partie principale en polymère thermoplastique.

21. Conduite selon la revendication 20, caractérisée en ce que la partie interne constitue une couche tubulaire, de préférence continue. réalisée en un polymère thermoplastique fluoré amorphe présentant une résistance élevée au fluage, l'épaisseur de ladite couche interne étant de préférence faible. de l'ordre de 0,5 mm à 3 mm.

22. Conduite selon la revendication 21, caractérisée en ce que le polymère thermoplastique fluoré amorphe est un copolymère ou un terpolymère associant au moins le TFE et un autre monomère fluoré, de préférence un éther cyclique fluoré ou un aldéhyde fluoré.

23. Conduite selon la revendication 20, caractérisée en ce que la partie interne est réalisée en un élastomère thermoplastique ou non, présentant un module relativement faible par rapport au polymère thermoplastique constituant la partie principale de la gaine polymérique, ladite partie interne présentant de préférence la forme d'une bande enroulée hélicoïdalement le long des interstices (9) de la carcasse interne (1) et pénétrant au moins partiellement dans lesdits interstices (9).

## Patentansprüche

1. Rohrförmiger, elastischer Schlauch des Typs, der zumindest von Innen nach Außen, aus einer inneren nicht dichten Metallkarkasse (1), aus einem inneren dichten Polymermantel (2), aus mehreren Schichten einer Drahtbewehrung (3, 4) und aus einem äußeren Schutzmantel (5) besteht, wobei die innere Karkasse (1) besteht aus einem spiralenförmig aufgerollten Profil aus ineinander greifenden Windungen, wobei zumindest die äußere Oberfläche der erwähnten inneren Karkasse Zwischenräume zwischen den aufeinanderfolgenden Windungen bildet, wobei der erwähnte innere dichte Polymermantel eine durchgängige elastische Schicht bildet und zumindest zu einem Teil aus einem thermoplastischen Polymer besteht, das zumindest zwei Fluor-Monomere Substanzen umfaßt, **dadurch gekennzeichnet,** daß das zumindest eine erwähnte Fluor-Monomer zumindest eine Alkoxy-Funktion hat, daß der erwähnte Teil aus dem thermoplastischem Polymer dabei beständig gegen Blasenbildung bis zu einer Temperatur von zumindest 130° C ist.

2. Schlauch nach Anspruch 1, dadurch gekennzeichnet, daß das thermoplastische Polymer den Hauptteil des inneren dichten Mantels (1) bildet und zumindest ein Fluor-Monomer und weniger als 50% eines Perfluor-Monomers enthält, das zumindest eine Alkoxy-Funktion trägt.

3. Schlauch nach Anspruch 1 oder 2, dadurch gekennzeichnet, daß das thermoplastische Polymer ein Perfluoroalkylvinylether mit zumindest einem Fluor-Monomer enthält.

4. Schlauch nach Anspruch 3, dadurch gekennzeichnet, daß der Perfluoroalkylvinylether der Perfluoropropylvinylether ist.

5. Schlauch nach Anspruch 3, dadurch gekennzeichnet, daß der Perfluoroalkylvinylether der Perfluoroethylvinylether ist.

6. Schlauch nach einem der Ansprüche 1 bis 5, dadurch gekennzeichnet, daß das thermoplastische Polymer zumindest 50 % des Tetrafluoroethylen (TFE) mit zumindest einem anderen Fluor-Monomer enthält, wobei zumindest eines der erwähnten anderen Fluor-Monomeren zumindest eine alkoxische Funktion trägt.

7. Schlauch nach einem der Ansprüche 1 bis 5, dadurch gekennzeichnet, daß das thermoplastische Polymer ein zyklisches Fluor-Monomer und zumindest ein anderes Monomer enthält, wobei zumindest ein der erwähnten anderen Fluor-Monomeren zumindest eine Alkoxy-Funktion trägt.

8. Schlauch nach einem der Ansprüche 1 bis 5, dadurch gekennzeichnet, daß das erwähnte thermoplastische Polymer Monomer eines anhydriden fluorhaltigen Typs und zumindest ein anderes fluorhaltiges Monomer umfaßt, wobei zumindest eines der erwähnten anderen fluorhaltigen Monomere eine Alkoxy-Funktion trägt.

9. Schlauch nach einem der Ansprüche 1 bis 8, dadurch gekennzeichnet, daß zumindest eine der zusammengelagerten fluorhaltigen Monomere, die das erwähnte thermoplastische Polymer bilden, ein zyklischer Ether ist.

10. Schlauch nach Anspuch 6, dadurch gekennzeichnet, daß das erwähnte thermoplastische Polymer zumindest 70 % TFE mit zumindest einem anderen Fluor-Monomer zusammen lagert, wobei zumindest eines der erwähnten anderen Fluor-Monomere eine Alkoxy-Funktion trägt.

11. Schlauch nach Anspruch 10, dadurch gekennzeichnet, daß das thermoplastische Polymer ein im Handel erhältliches und unter dem Namen PFA bekanntes Material ist.

12. Schlauch nach einem der Ansprüche 1 bis 10, dadurch gekennzeichnet, daß das thermoplastische Polymer ein dreifach Monomer bzw. Terpolymer mit zwei Fluor-Monomeren, von denen zumindest eines eine Alkoxy-Funktion trägt, und mit einem relativ geringen Anteil eines dritten Fluor-Monomers ist.

13. Schlauch nach Anspruch 12, dadurch gekennzeichnet, daß das dritte Fluor-Monomere ein Vinyliden-Florid ist (VF2).

14. Schlauch nach Anspruch 12, dadurch gekennzeichnet, daß das dritte Fluor-Monomere ein Chlortrifluorethylen ist (CTFE).

15. Schlauch nach Anspruch 12, dadurch gekennzeichnet, daß das Terpolymer zwei fluorhaltige monomere Substanzen, von denn jede zumindest eine Alkoxy-Funktion trägt, mit einem anderen Fluor-Monomeren zusammen lagert.

16. Schlauch nach einem der Ansprüche 1 bis 15, dadurch gekennzeichnet, daß das thermoplastische Polymer halb kristallin ist.

17. Schlauch nach einem der Ansprüch 1 bis 15, dadurch gekennzeichnet, daß das thermoplastische Polymer vernetzt ist und eine Kristallisationsrate bildet, die der entsprechenden Rate im nicht vernetzten Zustand nahe kommt, wobei die Vernetzung sich in der amorphen Phase erfolgt.

18. Schlauch nach einem der Ansprüche 1 bis 15, dadurch gekennzeichnet, daß das thermoplastische Polymer vernetzt ist und im Vergleich zum nicht vernetzten Zustand eine niedrigere Kristallisationsrate hat.

19. Schlauch nach einem der Ansprüche 1 bis 18, dadurch gekennzeichnet, daß das thermoplastische Polymer ein Biege- oder Elastizitätsmodul größer oder gleich 50 PMa aufweist, und vorzugsweise größer oder gleich 100 MPa, und zwar für die maximal vorgesehene Anwendungstemperatur., wobei diese Temperatur mindestens 130°C und vorzugsweise mindestens 150°C erreichen kann, und daß im übrigen das Biegemodul kleiner oder gleich 2500 MPa sein kann, und zwar für die angenommene niedrigste Umgebungs-Temperatur, die gleich oder kleiner -20°C und vorzugsweise -40°C sein kann.

20. Schlauch nach einem der Ansprüche 1 bis 19, dadurch gekennzeichnet, daß der innere dichte Polymermantel (1) einen Innenteil (7) aus vorzugsweise nicht kristallinem bzw. amorphe Polymer umfaßt und dieser auf dem inneren Karkasse (1) ruht, im Innerer des hauptsächlichten Teils aus thermoplastischem Polymer.

21. Schlauch nach dem Anspruch 20, dadurch gekennzeichnet, daß der innere Teil eine elastische, vorzugsweise durchgängige Schicht darstellt, hergestellt aus einem nicht kristallinen fluorhaltigen thermoplastischen Polymer, das sehr schwer verflüssigt, und daß die besagte innere Schicht weist vorzugsweise dünn ist, in der Regel zwischen 0,5 mm bis 3 mm.

22. Schlauch nach Anspruch 21, dadurch gekennzeichnet, daß das nicht kristalline fluorhaltige thermoplastische Polymer ein Copolymer oder ein Terpolymer ist, welches zumindest das TFE und ein anderes Fluor-Monomer zusammen lagert, vorzugsweise einen fluorhaltigen zyklischen Ether oder ein fluorhaltiges Aldehyd.

23. Schlauch nach Anspruch 20, dadurch gekennzeichnet, daß der innere Teil aus einem Elastomer hergestellt ist, und zwar als Thermoplast oder Nicht-Thermoplast, einen relativ schwaches Baustein gegenüber dem thermoplastischen Polymer darstellt, das den Hauptteil des Polymermantels bildet, wobei der besagte innere Teil vorzugsweise die Form eines spiralenförmigen Bandes hat, das sich entlang der Zwischenräume (9) der inneren Karkasse (1) und zumindest teilweise in diese Zwischenräume (9) erstreckt.

## Claims

1. Flexible tubular pipe of the type comprising at least, from the interior towards the exterior, an internal non-impervious metal carcass (1), an internal impervious polymeric sheath (2), a set of layers of reinforcement wires (3) (4), and an external protection sheath (5), the internal carcass (1) comprising at least one helically-wound profiled member with the turns clipped together so that at least the exterior surface of said internal carcass has interstices (9) between consecutive turns, said internal impervious polymeric sheath (2) being in the form of a continuous tubular layer and comprising a thermoplastic polymer part associating at least two fluoromonomers, characterized in that at least one of said fluoro monomers carries at least one alkoxy group, said thermoplastic polymer part being resistant to blistering at a temperature of at least 130°C.

2. Pipe according to claim 1 characterized in that the thermoplastic polymer constitutes the main part of the internal impervious sheath (1) and comprises at least one fluoromonomer and less than 50% of a perfluoromonomer carrying at least one alkoxy group.

3. Pipe according to claim 1 or claim 2 characterized in that the thermoplastic polymer associates a perfluoro(alkyl vinyl ether) with at least one fluoromonomer.

4. Pipe according to claim 3 characterized in that the perfluoro(alkyl vinyl ether) is perfluoro(propyl vinyl ether).

5. Pipe according to claim 3 characterized in that the perfluoro(alkyl vinyl ether) is perfluoro(ethyl vinyl ether).

6. Pipe according to any one of claims 1 to 5 characterized in that the thermoplastic polymer associates at least 50% of tetrafluoroethylene (TFE) with at least one other fluoromonomer, at least one of said other fluoromonomers carrying at least one alkoxy group.

7. Pipe according to any one of claims 1 to 5 characterized in that the thermoplastic polymer associates a cyclic fluoromonomer with at least one other fluoromonomer, at least one of said other fluoromonomers carrying at least one alkoxy group.

8. Pipe according to any one of claims 1 to 5 characterized in that said thermoplastic polymer associates an anhydride fluoromonomer with at least one other fluoromonomer, at least one of said other fluoromonomers carrying at least one alkoxy group.

9. Pipe according to any one of claims 1 to 8 characterized in that at least one of the fluoromonomers associated to constitute said thermoplastic polymer is a cyclic ether.

10. Pipe according to claim 6 characterized in that said thermoplastic polymer associates at least 70% of TFE with at least one other fluoromonomer, at least one of said other fluoromonomers carrying at least one alkoxy group.

11. Pipe according to claim 10 characterized in that the thermoplastic polymer is the type of material known as PFA.

12. Pipe according to any one of claims 1 to 10 characterized in that the thermoplastic polymer is a terpolymer associating two fluoromonomers one at least of which carries at least one alkoxy group with a relatively small proportion of a third fluoromonomer.

13. Pipe according to claim 12 characterized in that the third fluoromonomer is vinylidene fluoride (VF2).

14. Pipe according to claim 12 characterized in that the third fluoromonomer is chlorotrifluoroethylene (CTFE).

15. Pipe according to claim 12 characterized in that the terpolymer associates two fluoromonomers each carrying at least one alkoxy group with another fluoromonomer.

16. Pipe according to any one of claims 1 to 15 characterized in that the thermoplastic polymer is semicrystalline.

17. Pipe according to any one of claims 1 to 15 characterized in that the thermoplastic polymer is crosslinked and has a crystalinity close to that corresponding to the non-crosslinked state, the crosslinking being operative in the amorphous phase.

18. Pipe according to any one of claims 1 to 15 characterized in that the thermoplastic polymer is crosslinked and has a crystalinity lower than that of the non-crosslinked state.

19. Pipe according to any one of claims 1 to 18 characterized in that the thermoplastic polymer has a bending stiffness greater than or equal to 50 MPa and preferably greater than or equal to 100MPa for the maximal intended temperature of use, which temperature can be at least 130°C and preferably at least 150°C, the bending stiffness being less than or equal to 2 500 MPa for the lowest intended ambient temperature, which temperature can be equal to or less than -20°C and preferably to -40°C.

20. Pipe according to any one of claims 1 to 19 characterized in that the internal impervious polymeric sheath (1) has an internal part (7) in a preferably amorphous polymer and resting on the internal carcass (1) inside said thermoplastic polymer main part.

21. Pipe according to claim 20 characterized in that the internal part constitutes a preferably continuous tubular layer made of an amorphous thermoplastic fluoropolymer having a high creep resistance, the thickness of said internal layer preferably being small, in the order of 0.5 mm to 3 mm.

22. Pipe according to claim 21 characterized in that the amorphous thermoplastic fluoropolymer is a copolymer or a terpolymer associating at least TFE and another fluoromonomer, preferably a cyclic fluoro ether or a fluoro aldehyde.

23. Pipe according to claim 20 characterized in that the internal part is made of a thermoplastic or non-thermoplastic elastomer having a relatively low bending stiffness compared to the thermoplastic polymer constituting the main part of the polymeric sheath, said internal part preferably being in the form of a band helically wound along the interstices (9) of the internal carcass (1) and penetrating at least partially into said interstices (9).
